# EUROPEAN PATENT APPLICATION

(11) **EP 4 741 235 A1**
(43) Date of publication of application: **13.05.2026**
(21) Application number: 23944867.3
(22) Date of filing: 23.10.2023
(51) Int. Cl.: B60S 5/06, B60L 53/80

(54) **BATTERY SWAP STATION AND BATTERY SWAP METHOD**

(30) Priority: 10.07.2023 CN 202310834595
(71) Applicant: Contemporary Amperex Technology Co., Limited, Ningde, Fujian 352100 (CN)
(72) Inventor: WU, Kai, Ningde, Fujian 352100 (CN); DU, Xiaopeng, Ningde, Fujian 352100 (CN); CHEN, Disong, Ningde, Fujian 352100 (CN); YE, Qingfeng, Ningde, Fujian 352100 (CN); QUE, Shibiao, Ningde, Fujian 352100 (CN)
(74) Representative: Kraus & Lederer PartGmbB
(86) International application number: PCT/CN2023/125952
(87) International publication number: WO 2025/010861

(57) **Abstract**

Provided are a battery swapping station, and a battery swapping method. The battery swapping station comprises a lifting apparatus (21), a control apparatus (22), and a battery swapping device (24). The lifting apparatus (21) includes a plurality of lifting tables (211) which are used to support the electric device (1) and can be raised, and raising movements of at least two lifting tables (211) are independent. The control apparatus (22) is used to receive a tilt angle signal sent by the electric device (1), and can control a raising height of each lifting table (211) according to the tilt angle signal, wherein the tilt angle signal is used to reflect a tilt angle of the electric device (1). The battery swapping device (24) is used to swap a battery of the electric device (1). The battery swapping station can reduce the difficulty for disassembling and assembling a battery to increase efficiency for swapping the battery.

## Description

### CROSS-REFERENCE TO RELATED APPLICATIONS

The present application claims priority to Chinese Patent Application No. 202310834595. X, filed on Monday, July 10, 2023 and entitled "Battery Swapping Station, and Battery Swapping Method", which is incorporated herein by reference in its entirety.

### TECHNICAL FIELD

The present application relates to the field of battery swapping, particularly to a battery swapping station, and a battery swapping method.

### BACKGROUND

With the development of new energy technologies, batteries are widely used in electric devices, such as mobile phones, notebook computers, electric bicycles, electric vehicles, electric airplanes, electric ships, electric toy cars, electric toy ships, electric toy airplanes, electric tools, etc.

Limited by capacities of batteries, electric devices need frequent charging, and the charging takes time, affecting user experience.

### SUMMARY

The present application provides a battery swapping station and a battery swapping method, which can increase battery swapping efficiency.

In a first aspect, the present application provides a battery swapping station including a lifting apparatus, a control apparatus, and a battery swapping device. The lifting apparatus includes a plurality of lifting tables for supporting an electric device and capable of being raised, raising movements of at least two of the lifting tables being independent. The control apparatus is used to receive a tilt angle signal sent by the electric device, and can control a raising height of each lifting table according to the tilt angle signal, wherein the tilt angle signal is used to reflect a tilt angle of the electric device. The battery swapping device is used to swap a battery of the electric device.

The battery swapping station in an embodiment of the present application can swap a battery of an electric device, to replenish electric energy for the electric device in relatively short time. When the electric device moves to be above the plurality of lifting tables of the battery swapping station and is supported by the plurality of lifting tables, the control apparatus may control raising heights of the plurality of lifting tables according to the tilt angle signal sent by the electric device; and during a process of lifting the electric device, the plurality of lifting tables may level the electric device and enable the tilt angle of the electric device to within a preset range, so that the tilt angle of the battery is reduced, reducing the difficulty for disassembling and assembling the battery to increase efficiency for swapping the battery.

In some embodiments, the raising movements of the plurality of lifting tables are independent. The control apparatus may independently control a raising height of each lifting table, and that can increase an attitude adjustment range for the electric device to level the electric device in multiple directions, and increases stability during lifting of the electric device to reduce the shaking risk for the electric device during the leveling process.

In some embodiments, each of the lifting tables includes a support plate for supporting the electric device, and a driving assembly connected to the support plate and at least capable of driving the raising of the support plate. The control apparatus is in signal connection with the drive assembly.

Each lifting table is provided with the driving assembly, and the control apparatus can control a raising height of a support plate of each lifting table by sending different control signals to each driving assembly, thereby leveling the electric device.

In some embodiments, the driving assembly is further capable of driving the support plate to move in a horizontal direction. The driving assembly may drive movement of the support plate to change its position in the horizontal direction, thereby changing support sites of the plurality of lifting tables, so that the lifting apparatus can lift electric devices of different specifications, increasing an application range for the battery swapping station.

In some embodiments, the control apparatus includes a wireless signal receiving unit for receiving the tilt angle signal.

The tilt angle signal may be transmitted in a wireless manner, and the wireless signal receiving unit may receive the tilt angle signal, and in such a way, a signal transmission manner between the control apparatus and the electric device may be simplified to reduce a connection structure for the electric device and the battery swapping station to increase battery swapping efficiency.

In some embodiments, the electric device includes a vehicle.

According to a second aspect, the present application provides a battery swapping method including:
moving an electric device to be above a plurality of lifting tables of a battery swapping station for being supported by the plurality of lifting tables;
sending, by the electric device, its first tilt angle signal to a control apparatus of the battery swapping station;
controlling, by the control apparatus, raising heights of the plurality of lifting tables according to the first tilt angle signal, the plurality of lifting tables lifting the electric device and enabling a tilt angle of the electric device within a preset range; and
removing a battery of the electric device to install a fully charged battery to the electric device.

The embodiment of the present application, during a process of lifting the electric device, may enable leveling of the electric device and the tilt angle of the electric device within a preset range, so that the tilt angle of the battery is reduced, reducing the difficulty for disassembling and assembling the battery to increase efficiency for swapping the battery.

In some embodiments, the step of "controlling, by the control apparatus, raising heights of the plurality of lifting tables according to the first tilt angle signal, the plurality of lifting tables lifting the electric device and enabling a tilt angle of the electric device within a preset range" includes:
obtaining, by the control apparatus, a first tilt angle of the electric device according to the first tilt angle signal;
comparing, by the control apparatus, the first tilt angle with the preset range of the tilt angle of the electric device;
controlling, by the control apparatus, at least two lifting tables to rise by different heights to correct the tilt angle of the electric device to within the preset range in a case that the first tilt angle exceeds the preset range; and
controlling, by the control apparatus, the plurality of lifting tables to rise by the same height in a case that the first tilt angle is within the preset range.

In the embodiment of the present application, whether the electric device needs to be leveled is determined by comparing the first tilt angle with the preset range of the tilt angle of the electric device, and the rising heights of the plurality of lifting tables are set according to a comparison result, so that the tilt angle of the electric device is within the preset range, reducing the tilt angle of the battery to reduce the difficulty for disassembling and assembling the battery to increase efficiency for swapping the battery.

In some embodiments, the step of "removing a battery of the electric device to install a fully charged battery to the electric device" includes:
removing a battery of an electric device;
sending, by the electric device, its second tilt angle signal to a control apparatus of the battery swapping station;
obtaining, by the control apparatus, a second tilt angle of the electric device according to the second tilt angle signal, and comparing the second tilt angle with the preset range of the tilt angle of the electric device;
controlling, by the control apparatus, the raising of at least one lifting table to correct the tilt angle of the electric device to within the preset range in a case that the second tilt angle exceeds the preset range; and
keeping the plurality of lifting tables stationary in a case that the second tilt angle is within the preset range; and
installing the fully charged battery to the electric device.

After the battery is removed, the tilt angle of the electric device possibly also changes due to a load change. The control apparatus compares the second tilt angle with the preset range of the tilt angle of the electric device again to determine whether the electric device needs to be leveled again, and determines whether the lifting table needs to be raised according to a comparison result, so that the tilt angle of the electric device is within the preset range, reducing battery installation difficulty to increase battery swapping efficiency.

In some embodiments, the first tilt angle signal is transmitted in a wireless transmission manner, so that a signal transmission manner between the control apparatus and the electric device may be simplified to reduce a connection structure for the electric device and the battery swapping station to increase battery swapping efficiency.

### DESCRIPTION OF DRAWINGS

The feature, advantage, and technical effect of the exemplary embodiment of the present application is described below with reference to the figures.
FIG. 1 is a schematic diagram of a structure of a vehicle;
FIG. 2 is an exploded schematic view of the battery shown in FIG. 1;
FIG. 3 is a schematic view of a battery swapping station according to some embodiments of the present application;
FIG. 4 is a schematic diagram of an electric device;
FIG. 5 is a schematic view of a lifting table of a battery swapping station according to some embodiments of the present application; and
FIG. 6 is a schematic flow diagram of a battery swapping method according to some embodiments of the present application.

The figures are not necessarily drawn to the actual scale.

### DESCRIPTION OF EMBODIMENTS

To make the objectives, technical solutions, and advantages of embodiments of the present application clearer, the following clearly describes the technical solutions in the embodiments of the present application with reference to the drawings in the embodiments of the present application. Clearly, the described embodiments are some but not all of the embodiments of the present application. All other embodiments obtained by a person skilled in the art based on the embodiments of the present application without making creative efforts shall fall within the protection scope of the present application.

Unless otherwise defined, all technical and scientific terms used in the present application have the same meaning as commonly understood by a person skilled in the art of the present application. In the present application, the terms used in the description of the present application are only used for describing specific embodiments and are not intended to limit the present application, and the terms "comprise", "have", and any variations thereof in the description and claims of the present application and the above description of the drawings are intended to cover a non-exclusive inclusion. The terms "first", "second", and the like in the description and claims of the present application or in the drawings are used to distinguish between different objects, and are not used to describe a specific sequence or a primary-secondary relationship.

An "embodiment" in the present application means that a specific feature, structure, or characteristic described with reference to the embodiment may be included in at least one embodiment of the present application. The phrase in various places in the description does not necessarily all refer to the same embodiment, or a separate or alternative embodiment mutually exclusive of other embodiments.

In the description of the present application, it should be noted that, unless explicitly specified and defined otherwise, the terms "mount", "couple", "connect", and "attach" are to be understood in a broad sense. For example, the terms may indicate a fixed connection, a detachable connection, or an integral connection, and may indicate a direct connection or an indirect connection implemented via an intermediate medium, or internal communication between two elements. A person skilled in the art can understand specific meanings of these terms in the present application according to specific situations.

The term "and/or" in the present application is only an associative relationship for describing associated objects, indicating that three relationships may be present. For example, A and/or B may indicate three cases: presence of only A; presence of both A and B; and presence of only B. In addition, the symbol "/" in the present application generally represents an "or" relationship between associated objects.

In the embodiments of the present application, the same reference numerals denote the same component, and a detailed description of the same component is omitted in different embodiments for the sake of brevity. It should be understood that the dimensions of various components, such as the thickness, length, and width, and the dimensions of an integrated device, such as the overall thickness, length, and width, in the embodiments of the present application shown in the figures are merely illustrative and should not be construed as limiting the present application.

The term "a plurality of" in the present application refers to more than two (including two).

In the embodiment of the present application, "parallel" includes not only an absolutely parallel case, but also an approximately parallel case conventionally recognized in engineering; and "perpendicular" includes not only an absolutely perpendicular case, but also an approximately perpendicular case conventionally recognized in engineering.

With the development of new energy technologies, devices using batteries are increased, and when electric energy of electric devices runs out, the electric energy is usually replenished by connection with a charging device, for example, an electric vehicle may be charged by connecting it to a charging pile. Charging takes a long time, affecting user experience.

Swapping a battery enables faster replenishment of electrical energy than charging. The present application provides a battery swapping station which can remove a battery of an electric device whose energy runs out, and install a fully charged battery to the electric device, thereby replenishing electric energy to the electric device in relatively short time.

However, the electric device may tilt for various reasons, such as its local deformation, an unevenly distributed load applied thereto or the like, and that may cause the battery of the electric device to tilt; when the battery tilts, the difficulty for aligning the battery with the battery swapping device of the battery swapping station for disassembling and assembling a battery increases, increasing the difficulty for disassembling and assembling the battery and reducing efficiency for disassembling and assembling the battery; and particularly, when the battery tilts too much, problems may be also caused, for example, the battery being unable to be disassembled or the battery being damaged by pressing.

In view of this, an embodiment of the present application provides a battery swapping station provided with a plurality of lifting tables for lifting an electric device, and the battery swapping station may level the electric device by controlling raising heights of the lifting tables to reduce the tilt angle of the battery, reducing the difficulty for disassembling and assembling the battery to increase efficiency for swapping the battery.

The battery swapping station and the battery swapping method disclosed in the embodiments of the present application may be used for, but are not limited to, swapping a battery of a vehicle. The vehicle may be a fuel vehicle, a gas vehicle, or a new energy vehicle, and the new energy vehicle may be a battery electric vehicle, a hybrid vehicle, or a range-extended electric vehicle.

In the following, a vehicle is used as an example of the electric device.

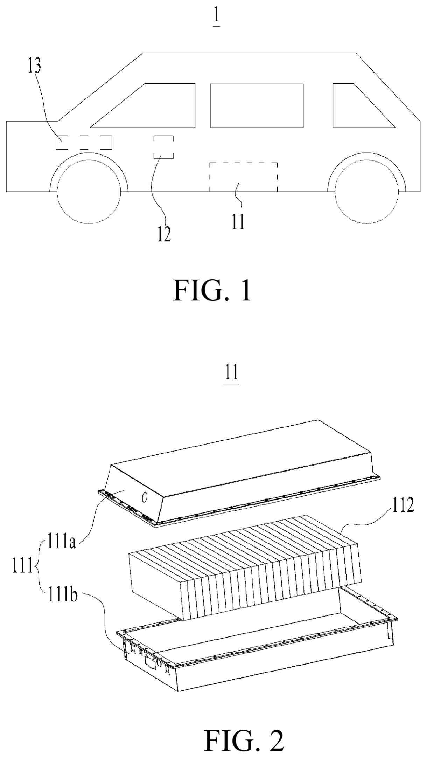

FIG. 1 is a schematic diagram of a structure of a vehicle. As shown in FIG. 1, the vehicle 1 is provided with a battery 11 which may be provided at the bottom, head, or tail of the vehicle 1. The battery 11 may be used to power the vehicle 1, for example, the battery 11 may be used as an operating power source of the vehicle 1.

The vehicle 1 may further include a controller 12 and a motor 13, and the controller 12 is used to control the battery 11 to power the motor 13, for example, for a working power requirement for the vehicle 1 during starting, navigating, and driving the vehicle 1000.

In some embodiments of the present application, the battery 11 may be used not only as an operating power source for the vehicle 1, but also as a driving power source for the vehicle 1, instead of or partially instead of fuel or natural gas to provide driving power for the vehicle 1.

In some embodiments, the battery 11 may be clamped on the chassis of the vehicle 1 through a buckle structure.

FIG. 2 is an exploded schematic view of the battery shown in FIG. 1. As shown in FIG. 2, the battery 11 may refer to a single physical module that includes one or more battery cells 112 for providing a higher voltage and capacity.

In some embodiments, the battery 11 may be a battery pack.

As an example, the battery 11 includes a box 111 and a battery cell 112. The battery cell 112 is accommodated in the box 111.

The box 111 may be a component that accommodates the battery cell 112. The box 111 is an accommodation space for the battery cell 112, and the box 111 may have various structures.

In some embodiments, the box 111 may include a first box portion 111a and a second box portion 111b, the first box portion 111a and the second box portion 111b cover each other, and the first box portion 111a and the second box portion 111b jointly define the accommodation space for accommodating the battery cell 112. The second box portion 111b may be a hollow structure with an opening at one end, the first box portion 111a is a plate-shaped structure, and the first box portion 111a covers an opening side of the second box portion 111b to form the box 111 having the accommodation space; and the first box portion 111a and second box portion 111b may also both be a hollow structure with an opening at one end, and an opening side of the first box portion 111a covers an opening side of the second box portion 111b to form the box 111 having the accommodation space. Certainly, the first box portion 111a and second box portion 111b may be in various shapes such as cylinder, rectangular cuboid, etc.

In the battery 11, one or more battery cells 112 may be provided. If a plurality of battery cells 112 are provided, the plurality of battery cells 112 may be subjected to series connection, parallel connection, or series-parallel connection, and the series-parallel connection means that the plurality of battery cells 112 are subjected to both series connection, and parallel connection.

The plurality of battery cells 112 may be subjected to series connection, parallel connection, or series-parallel connection directly, and then an integration formed by the plurality of battery cells 112 is accommodated in the box 111. Certainly, alternatively, a battery module may be formed by integrating the plurality of battery cells 112 by series connection, parallel connection, or series-parallel connection, and then a plurality of battery modules are integrated by series connection, parallel connection, or series-parallel connection, and accommodated in the box 111.

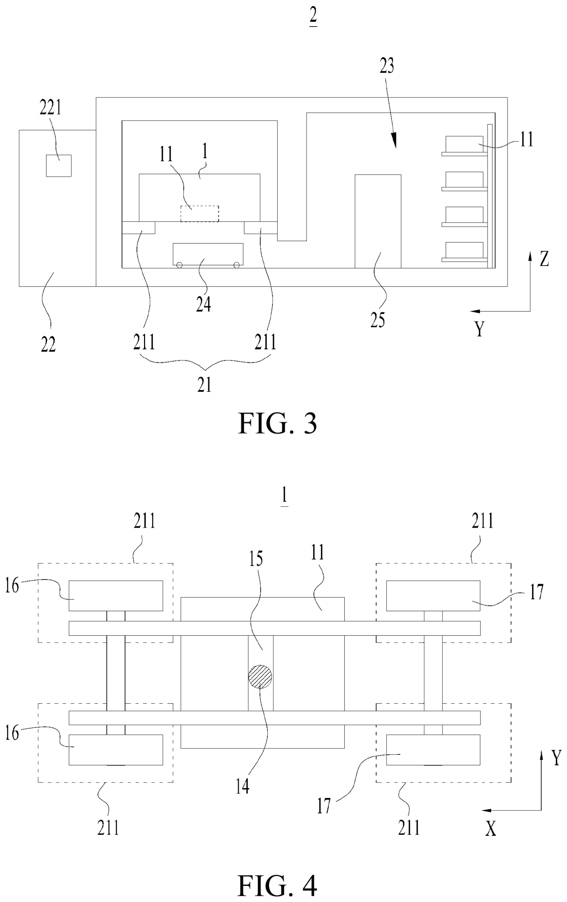

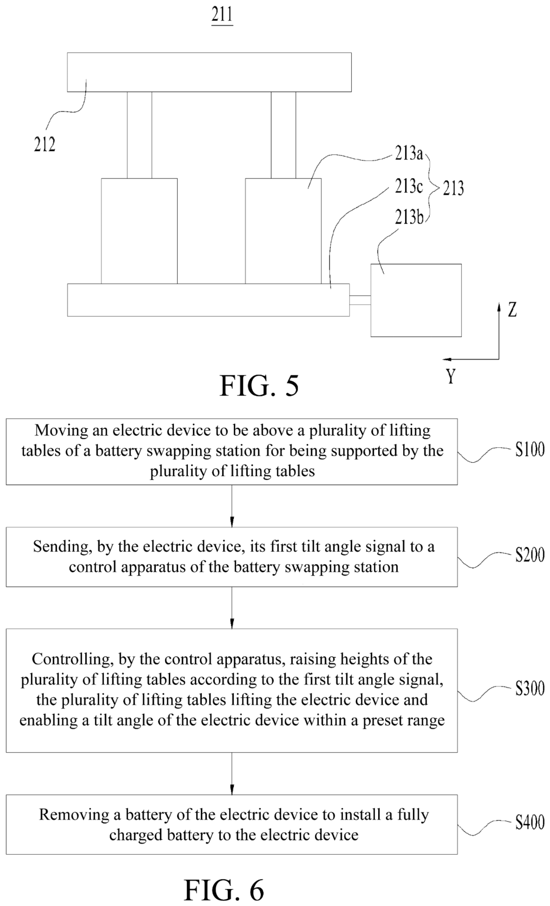

FIG. 3 is a schematic view of a battery swapping station according to some embodiments of the present application; FIG. 4 is a schematic diagram of an electric device; and FIG. 5 is a schematic view of a lifting table of a battery swapping station according to some embodiments of the present application.

As shown in FIG. 3 to FIG. 5, the battery swapping station 2 of the embodiment of the present application includes a lifting apparatus 21 and a control apparatus 22. The lifting apparatus 21 includes a plurality of lifting tables 211 which are used to support the electric device and can be raised, and the raising movements of at least two lifting tables (211) are independent. The control apparatus 22 is used to receive a tilt angle signal sent by the electric device, and can control a raising height of each lifting table 211 according to the tilt angle signal. The tilt angle signal is used to reflect the tilt angle of the electric device.

The plurality of lifting tables 211 are used to support a plurality of sites of the electric device.

That the raising movements of the two lifting tables 211 are independent means that they can be controlled independently, with no interacted relationship between them. In other words, the two lifting tables 211 may be raised synchronously or asynchronously.

Exemplarily, the lifting direction Z of the raising tables 211 is a vertical direction perpendicular to a horizontal plane.

In some examples, the raising movements of the plurality of lifting tables 211 are independent, and raising movement of each lifting table 211 can be independently controlled.

In other examples, some lifting tables 211 have an interacted relationship, that is, these lifting tables 211 can only be raised synchronously. The remaining lifting tables 211 can be independently raised, and independently controlled.

The tilt angle signal is a signal for representing the tilt angle of the electric device. The electric device may obtain its own tilt angle, and may convert it into a signal (i.e., the tilt angle signal) that can be recognized by the control apparatus 22, and the control apparatus 22 may obtain the tilt angle of the electric device according to the signal.

The tilt angle of the electric device may be based on a tilt angle of a measurement site, or may be obtained by comprehensive calculation according to tilt angles of a plurality of measurement sites. Optionally, a measurement site of the electric device may be provided with an tilt angle sensor 14, and an tilt angle detected by the tilt angle sensor 14 is used as the tilt angle of the electric device.

Exemplarily, the tilt angle of the electric device may be used to represent an inclination degree of a set measurement site of the electric device relative to a horizontal plane.

A first direction X and a second direction Y are perpendicular to each other, and are parallel to a horizontal plane. Exemplarily, the tilt angle of the electric device may be an angle at which the measurement site of the electric device is inclined relative to the first direction X, or an angle at which the measurement site of the electric device is inclined relative to the second direction Y, or may include both an angle at which the measurement site is inclined relative to the first direction X and an angle at which the measurement site is inclined relative to the second direction Y.

The tilt angle signal of the electric device may be transmitted to the control apparatus 22 in a wired transmission manner, or a wireless transmission manner.

The battery swapping station 2 in an embodiment of the present application can swap a battery 11 of the electric device, to replenish electric energy for the electric device in a relatively short time. When the electric device moves to be above the plurality of lifting tables 211 of the battery swapping station 2 and is supported by the plurality of lifting tables 211, the control apparatus 22 may control the raising heights of the plurality of lifting tables 211 according to the tilt angle signal sent by the electric device; and during a process of lifting the electric device, the plurality of lifting tables 211 may level the electric device and enable the tilt angle of the electric device to within a preset range, thereby reducing a tilt angle of a battery 11 to reduce the difficulty for disassembling and assembling the battery 11 to increase efficiency for swapping the battery 11.

In some embodiments, the raising movements of the plurality of lifting tables 211 are independent. The raising movements of all the lifting tables 211 are independent, the control apparatus 22 may independently control a raising height of each lifting table, and that can increase an attitude adjustment range for the electric device to level the electric device in multiple directions, and increases stability during lifting of the electric device to reduce the shaking risk for the electric device during the leveling process.

In some embodiments, each of the lifting tables 211 includes a support plate 212 for supporting the electric device, and a driving assembly 213 which is connected to the support plate 212 and can at least drive the raising of the support plate 212. The control apparatus 22 is in signal connection with the drive assembly 213.

The driving assembly 213 may be in signal connection with the driving assembly 213 in a wired manner, or in a wireless manner.

Exemplarily, the driving assembly 213 may include, but is not limited to, at least one of a motor, an air cylinder, and a hydraulic cylinder.

In the embodiment of the present application, each lifting table 211 is provided with the driving assembly 213, and the control apparatus 22 may control a raising height of a support plate 212 of each lifting table 211 by sending different control signals to each driving assembly 213, thereby leveling the electric device.

In some embodiments, the driving assembly 213 can further drive the support plate 212 to move in the horizontal direction.

Exemplarily, the horizontal direction is perpendicular to a raising direction Z of the support plate 212. The horizontal direction may be the first direction X; or the second direction Y.

In the embodiment of the present application, the driving assembly 213 may drive movement of the support plate 212 to change its position in the horizontal direction, thereby changing support sites of the plurality of lifting tables 211, so that the lifting apparatus 21 can lift electric devices of different specifications, increasing an application range for the battery swapping station 2.

In some embodiments, the driving assembly 213 includes a first driver 213a and a second driver 213b. The first driver 213a is located at a lower side of the support plate 212 and connected to the support plate 212, and the first driver 213a is used to drive raising movement of the support plate 212. The second driver 213b is connected to the first driver 213a, and drives the support plate 212 to move in the horizontal direction through the first driver 213a.

In some embodiments, the driving assembly 213 further includes a sliding table 213c movable in the horizontal direction; and the second driver 213b is connected to the sliding table 213c and used to drive the sliding table 213c to move in the horizontal direction. The first driver 213a is fixed to the slide table 213c.

In some embodiments, the control apparatus 22 includes a wireless signal receiving unit 221 for receiving the tilt angle signal.

In the embodiment of the present application, the tilt angle signal may be transmitted in a wireless manner, and the wireless signal receiving unit 221 may receive the tilt angle signal, and in such a way, a signal transmission manner between the control apparatus 22 and the electric device may be simplified to reduce a connection structure for the electric device and the battery swapping station 2, and to increase swapping efficiency for the battery 11.

In some embodiments, the electric device includes a vehicle 1. In other words, the battery swapping station 2 in the embodiment of the present application is a battery swapping station for swapping the battery 11 of the vehicle 1.

The vehicle 1 may be a passenger car or a truck. Optionally, the battery swapping station 2 in the embodiment of the present application is used to swap a battery 11 of a heavy truck.

In some embodiments, the first direction X is parallel to a direction pointing to a rear part of the vehicle 1 from its body. Optionally, the first direction X is a length direction of the vehicle 1.

In some embodiments, the second direction Y may be a width direction of the vehicle 1.

In some embodiments, the vehicle 1 includes a frame 15 for mounting the battery 11 and an tilt angle sensor 14 mounted to the frame 15.

The frame 15 is used to mount the battery 11, the tilt angle of the frame 15 can more accurately reflect a current state of the battery 11, and in the embodiment of the present application, the tilt angle sensor 14 is mounted to the frame 15.

In some embodiments, the tilt sensor 14 is a biaxial tilt sensor. The biaxial tilt sensor may simultaneously detect the front-rear tilt angle of the vehicle 1 and the left-right tilt angle of the vehicle 1 to feed back the inclination state of the vehicle 1 to the control apparatus 22.

Exemplarily, the front-rear tilt angle may be used to represent an angle at which the vehicle 1 is inclined relative to the first direction X, and the left-right tilt angle may be used to represent an angle at which the vehicle 1 is inclined relative to the second direction Y.

The tilt angle of the vehicle 1 includes the front-rear tilt angle and the left-right tilt angle.

In some embodiments, the lifting apparatus 21 includes at least four lifting tables 211, two lifting tables 211 for lifting two front wheels 16 of the vehicle 1, and two lifting tables 211 for lifting two rear wheels 17 of the vehicle 1.

The four lifting tables 211 can lift the four wheels (the two front wheels 16 and the two rear wheels 17) by different heights, respectively, to simultaneously adjust the front-rear tilt angle and the left-right tilt angle of the vehicle 1, thereby leveling the vehicle 1.

In some embodiments, the battery swapping station 2 further includes a battery compartment 23 and a battery swapping device 24. The battery compartment 23 is used to store and charge a battery. The battery swapping device 24 is configured to be movable between the lifting apparatus 21 and the battery compartment 23. The battery swapping device 24 may be used to swap the battery of the electrical device.

Exemplarily, the battery swapping station 2 of the embodiment of the present application can swap a battery according to the following steps: I) an electric device is moved to be above the plurality of lifting tables 211 of the battery swapping station 2 and is supported by the plurality of lifting tables 211, and the plurality of lifting tables 211 lift the electric device; II) the battery swapping device 24 may move to be below the electric device and detach a battery whose energy runs out from the electric device; III) the battery swapping device 24 transfers the detached battery to be charged to the battery compartment 23 for charging and receives a fully charged battery stored in the battery compartment 23; IV) carrying the fully charged battery, the battery swapping device 24 moves to be below the electric device, and mounts the fully charged battery to the electric device; and V) the electric device leaves the lifting apparatus 21.

In some embodiments, the battery swapping station 2 further includes a rail in which the battery swapping device 24 is movably disposed. The rail is used to guide the movement of the battery swapping device 24, so that it can move between the lifting apparatus 21 and the battery compartment 23. Exemplarily, an end of the rail extends into the battery compartment 23, and the other end extends to be below the lifting apparatus 21.

In some embodiments, in the battery compartment 23, a stacker crane 25 is provided, and it is used to transfer the battery to be charged that is detached by the battery swapping device 24 to a charging position of the battery compartment 23 for charging, and places the fully charged battery stored in the battery compartment 23 onto the battery swapping device 24. FIG. 6 is a schematic flow diagram of a battery swapping method according to some embodiments of the present application.

Referring to FIGS. 3 to 6, the embodiment of the the present application provides a battery swapping method including:
S100 of moving an electric device to be above the plurality of lifting tables 211 of the battery swapping station 2 for being supported by the plurality of lifting tables 211;
S200 of sending, by the electric device, its first tilt angle signal to the control apparatus 22 of the battery swapping station 2;
S300 of controlling, by the control apparatus 22, raising heights of the plurality of lifting tables 211 according to the first tilt angle signal, the plurality of lifting tables 211 lifting the electric device and enabling a tilt angle of the electric device within a preset range; and
S400 of removing a battery 11 of the electric device to install a fully charged battery to the electric device.

Exemplarily, the first tilt angle may be used to represent an inclination state of the electric device before it is lifted by the lifting table 211. The electric device may convert its own first tilt angle into a signal (i.e., the first tilt angle signal) that can be recognized by the control apparatus 22, and the control apparatus 22 may obtain a current tilt angle of the electric device according to the first tilt angle signal.

The first tilt angle signal may be transmitted to the control apparatus 22 by a wired transmission manner or a wireless transmission manner.

The preset range may be determined according to the requirement for the position accuracy of the battery 11 for the battery swapping station 2. For example, if the angle at which the electric device is inclined relative to the first direction X is less than or equal to 5°, and the angle at which the electric device is inclined relative to the second direction Y is less than or equal to 5°, it may be considered that the tilt angle of the electric device is within the preset range.

According to the battery swapping method in the embodiment of the present application, in a process of lifting an electric device, the electric device is leveled, and the tilt angle of the electric device is enabled to within a preset range, so that the tilt angle of the battery is reduced, reducing the difficulty for disassembling and assembling the battery to increase efficiency for swapping the battery.

In some embodiments, step S100 includes:
S310 of obtaining, by the control apparatus 22, a first tilt angle of the electric device according to the first tilt angle signal;
S320 of comparing, by the control apparatus 22, the first tilt angle with the preset range of the tilt angle of the electric device;
S330 of controlling, by the control apparatus 22, at least two lifting tables 211 to rise by different heights to correct the tilt angle of the electric device to within the preset range in a case that the first tilt angle exceeds the preset range; and
S340 of controlling, by the control apparatus 22, the plurality of lifting tables 211 to rise by the same height in a case that the first tilt angle is within the preset range.

In step 340, the control apparatus 22 controls all the lifting tables 211 to rise by the same height.

In the embodiment of the present application, by comparing the first tilt angle with the preset range of the tilt angle of the electric device, it is determined whether the electric device needs to be leveled, and the rising heights of the plurality of lifting tables 211 are set according to the comparison result, so that the tilt angle of the electric device is within the preset range to reduce the tilt angle of the battery 11, reducing the difficulty for disassembling and assembling the battery 11 to increase efficiency for swapping the battery 11.

For example, the first tilt angle may include an angle at which the electric device is inclined relative to the first direction X and an angle at which the electric device is inclined relative to the second direction Y. When the angle at which the electric device is inclined relative to the first direction X is greater than 5°, or when the angle at which the electric device is inclined relative to the first direction Y is greater than 5°, it may be considered that the first tilt angle of the electric device exceeds the preset range.

In some embodiments, step S400 includes:
S410 of removing a battery of an electric device;
S420 of sending, by the electric device, its own second tilt angle signal to the control apparatus 22 of the battery swapping station 2;
S430 of obtaining, by the control apparatus 22, a second tilt angle of the electric device according to the second tilt angle signal, and comparing the second tilt angle with the preset range of the tilt angle of the electric device;
S440 of controlling, by the control apparatus 22, the raising of at least one lifting table 211 to correct the tilt angle of the electric device to within the preset range in a case that the second tilt angle exceeds the preset range; and
S450 of keeping the plurality of lifting tables 211 stationary in a case that the second tilt angle is within the preset range; and
S460 of installing the fully charged battery to the electric device.

After the removal, the tilt angle of the electric device possibly also changes due to a load change. The control apparatus 22 compares the second tilt angle with the preset range of the tilt angle of the electric device again to determine whether the electric device needs to be leveled again, and determines whether the lifting table needs to be raised according to a comparison result, so that the tilt angle of the electric device is within the preset range, reducing battery installation difficulty to increase battery swapping efficiency.

In some embodiments, the first tilt angle signal is transmitted in a wireless transmission manner, and that may may simplify the signal transmission manner between the control apparatus 22 and the electric device, reducing the connection structure for the electric device and the battery swapping station 2 to increase battery swapping efficiency.

In some embodiments, the second tilt angle signal is transmitted by a wireless transmission manner.

Referring to FIG. 3 to FIG. 5, an embodiment of the present application provides the battery swapping station 2 for swapping the battery of the vehicle 1. The battery swapping station 2 includes the lifting apparatus 21 and the control apparatus 22. The lifting apparatus 21 includes a plurality of lifting tables 211 which are used to support the vehicle 1 and can be raised, and raising movements of the plurality of lifting tables 211 are independent.

The control apparatus 22 is used to receive the tilt angle signal sent by the vehicle 1, and can control a raising height of each lifting table 211 according to the tilt angle signal. The tilt angle signal is used to reflect the front-rear tilt angle and the left-right tilt angle of the vehicle 1.

In some embodiments, the vehicle 1 is provided with a biaxial tilt angle sensor.

Although this application has been described with reference to some preferred embodiments, various modifications to this application and replacements of the components therein with equivalents can be made without departing from the scope of this application. In particular, the technical features mentioned in the embodiments may be combined in any manner provided that there is no structural conflict. The present application is not limited to the specific embodiments disclosed herein, but includes all technical solutions falling within the scope of the claims.

## Claims

1. A battery swapping station, comprising:
a lifting apparatus comprising a plurality of lifting tables for supporting an electric device and capable of being raised, raising movements of at least two of the lifting tables being independent;
a control apparatus for receiving a tilt angle signal sent by the electric device and capable of controlling a raising height of each lifting table according to the tilt angle signal, wherein the tilt angle signal is used to reflect a tilt angle of the electric device; and
a battery swapping device for swapping a battery of the electric device.

2. The battery swapping station according to claim 1, wherein raising movements of the plurality of lifting tables are independent.

3. The battery swapping station according to claim 2, wherein each of the lifting tables comprises a support plate for supporting the electric device, and a driving assembly connected to the support plate and at least capable of driving the raising of the support plate; and
the control apparatus is in signal connection with the drive assembly.

4. The battery swapping station according to claim 3, wherein the driving assembly is capable of further driving the support plate to move in a horizontal direction.

5. The battery swapping station according to any one of claims 1-4, wherein the control apparatus comprises a wireless signal receiving unit for receiving the tilt angle signal.

6. The battery swapping station according to claim 5, wherein the electric device comprises a vehicle.

7. A battery swapping method, comprising:
moving an electric device to be above a plurality of lifting tables of a battery swapping station for being supported by the plurality of lifting tables;
sending, by the electric device, its first tilt angle signal to a control apparatus of the battery swapping station;
controlling, by the control apparatus, raising heights of the plurality of lifting tables according to the first tilt angle signal, the plurality of lifting tables lifting the electric device and enabling a tilt angle of the electric device within a preset range; and
removing a battery of the electric device to install a fully charged battery to the electric device.

8. The battery swapping method according to claim 7, wherein the step of controlling, by the control apparatus, raising heights of the plurality of lifting tables according to the first tilt angle signal, the plurality of lifting tables lifting the electric device and enabling a tilt angle of the electric device within a preset range comprises:
obtaining, by the control apparatus, a first tilt angle of the electric device according to the first tilt angle signal;
comparing, by the control apparatus, the first tilt angle with the preset range of the tilt angle of the electric device;
controlling, by the control apparatus, at least two lifting tables to rise by different heights to correct the tilt angle of the electric device to within the preset range in a case that the first tilt angle exceeds the preset range; and
controlling, by the control apparatus, the plurality of lifting tables to rise by the same height in a case that the first tilt angle is within the preset range.

9. The battery swapping method according to claim 7 or 8, wherein the step of removing a battery of the electric device to install a fully charged battery to the electric device comprises:
removing a battery of the electric device;
sending, by the electric device, its own second tilt angle signal to the control apparatus of the battery swapping station;
obtaining, by the control apparatus, a second tilt angle of the electric device according to the second tilt angle signal, and comparing the second tilt angle with the preset range of the tilt angle of the electric device;
controlling, by the control apparatus, the raising of at least one lifting table to correct the tilt angle of the electric device to within the preset range in a case that the second tilt angle exceeds the preset range; and
keeping the plurality of lifting tables stationary in a case that the second tilt angle is within the preset range; and
installing the fully charged battery to the electric device.

10. The battery swapping method according to any one of claims 7-9, wherein the first tilt angle signal is transmitted by a wireless transmission manner.
